# EUROPÄISCHE PATENTSCHRIFT

(11) **EP 3 652 352 B1**
(45) Veröffentlichungstag und Bekanntmachung des Hinweises auf die Patenterteilung: **04.01.2023**
(21) Anmeldenummer: 18737532.4
(22) Anmeldetag: 26.06.2018
(51) Int. Cl.: C21D 9/46, C21D 1/18, C21D 1/673, C23C 2/06, C23C 2/28

(54) **VERFAHREN UND VORRICHTUNG ZUR WÄRMEBEHANDLUNG EINES METALLISCHEN BAUTEILS**
METHOD AND DEVICE FOR THE HEAT TREATMENT OF A METAL COMPONENT
PROCÉDÉ ET DISPOSITIF DE TRAITEMENT THERMIQUE D'UNE PIÈCE MÉTALLIQUE

(30) Priorität: 13.07.2017 DE 102017115755
(43) Veröffentlichungstag der Anmeldung: 20.05.2020
(73) Patentinhaber: Schwartz GmbH, 52152 Simmerath (DE)
(72) Erfinder: WILDEN, Frank, 52152 Simmerath (DE); WINKEL, Jörg, 52385 Nideggen-Schmidt (DE); REINARTZ, Andreas, 52156 Monschau (DE)
(74) Vertreter: Keenway Patentanwälte Neumann Heine Taruttis
(86) Internationale Anmeldenummer: PCT/EP2018/067158
(87) Internationale Veröffentlichungsnummer: WO 2019/011650

(56) Entgegenhaltungen:
- WO-A1-2011/054575
- WO-A1-2017/129599
- DE-A1-102015 113 056
- DE-B4-102011 053 941
- DE-U1-202016 104 191
- DE-U1-202016 104 194
- US-A1- 2015 299 817

## Beschreibung

Die Erfindung betrifft ein Verfahren und eine Vorrichtung zur Wärmebehandlung eines metallischen Bauteils. Die Erfindung findet insbesondere Anwendung beim partiellen Härten von vorbeschichteten Bauteilen aus vorzugsweise einem hochfesten Mangan-Bor-Stahl.

Zur Herstellung sicherheitsrelevanter Fahrzeug-Karosseriebauteile aus Stahlblech ist es regelmäßig erforderlich das Stahlblech während oder nach der Umformung zu dem Karosseriebauteil zu härten. Hierzu hat sich ein Wärmebehandlungsverfahren etabliert, das als "Presshärten" bezeichnet wird. Dabei wird das Stahlblech, das regelmäßig in der Form einer Platine bereitgestellt wird zunächst in einem Ofen aufgeheizt und anschließend während der Umformung in einer Presse abgekühlt und dadurch gehärtet.

Seit einigen Jahren besteht nun das Bestreben mittels des Presshärtens Karosseriebauteile von Kraftfahrzeugen, wie z. B. A- und B-Säulen, Seitenaufprallschutzträger in Türen, Schweller, Rahmenteile, Stoßstangenfänger, Querträger für Boden und Dach, vordere und hintere Längsträger, bereitzustellen, die in Teilbereichen unterschiedliche Festigkeiten aufweisen, sodass das Karosseriebauteil partiell unterschiedliche Funktionen erfüllen kann. So soll zum Beispiel der mittlere Bereich einer B-Säule eines Fahrzeugs eine hohe Festigkeit aufweisen, um die Insassen im Falle eines Seitenaufpralls zu schützen. Gleichzeitig sollen der obere und untere Endbereich der B-Säule eine vergleichsweise geringe Festigkeit aufweisen, um zum einen Verformungsenergie während eines Seitenaufpralls aufnehmen zu können und zum anderen während der Montage der B-Säule eine einfache Verbindbarkeit mit anderen Karosseriebauteilen zu ermöglichen.

Zur Ausbildung eines solchen partiell gehärteten Karosseriebauteils ist es erforderlich, dass das gehärtete Bauteil in den Teilbereichen unterschiedliche Materialgefüge beziehungsweise Festigkeitseigenschaften aufweist. Zur Einstellung unterschiedlicher Materialgefüge beziehungsweise Festigkeitseigenschaften nach dem Härten kann beispielsweise das zu härtende Stahlblech bereits mit unterschiedlichen, miteinander verbundenen Blechabschnitten und/oder unterschiedlichen Materialstärken bereitgestellt und/oder in der Presse partiell unterschiedlich abgekühlt werden. Alternativ oder zusätzlich besteht die Möglichkeit, das zu härtende Stahlblech vor dem Abkühlen und Umformen in der Presse partiell unterschiedlichen Wärmebehandlungsprozessen zu unterwerfen.

Darüber hinaus sind die zu härtenden Bauteile regelmäßig vorbeschichtet. Hierbei ist zu berücksichtigen, dass zu hohe Umformraten und/oder zu hohe Bauteiltemperaturen zu einer Rissbildung in der Beschichtung oder sogar zu einer vollständigen Zerstörung der Beschichtung führen können. Besonders sensibel sind in diesem Zusammenhang Zink enthaltende Beschichtungen.

Verfahren zum thermischen Behandeln von Bauteilen sind aus der DE 20 2016 104 194 U1, der DE 20 2016 104 191 U1, der US 2015/299817 A1, der WO 2011/054575 A1, der DE 10 2011 053 941 B4, der DE 10 2015 113 056 A1 und der WO 2017/129599 A1 bekannt.

Hiervon ausgehend ist es Aufgabe der vorliegenden Erfindung, die mit Bezug auf den Stand der Technik geschilderten Probleme zumindest teilweise zu lösen. Insbesondere sollen ein Verfahren und eine Vorrichtung zur Wärmebehandlung eines metallischen Bauteils angegeben werden, die in der industriellen Serienfertigung die Herstellung eines pressgehärteten Bauteils mit in Teilbereichen unterschiedlichen Festigkeiten erlauben und gleichwohl eine beispielsweise Zink enthaltende (Vor-)Beschichtung des Bauteils schonen. Zudem sollen das Verfahren und die Vorrichtung vorzugsweise möglichst energiekostenschonend ausführbar beziehungsweise betreibbar und/oder möglichst investitionskostenschonend realisierbar beziehungsweise herstellbar sein. Darüber hinaus sollen das Verfahren sowie die Vorrichtung insbesondere eine möglichst geringe Taktzeit erlauben.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Ein erfindungsgemäßes Verfahren zur Wärmebehandlung eines vorbeschichteten metallischen Bauteils weist zumindest folgende Schritte auf, welche in der angegebenen Reihenfolge nacheinander durchgeführt werden:
a) Erwärmen des Bauteils in einem ersten Ofen,
b) Einstellen einer Temperaturdifferenz zwischen zumindest einem ersten Teilbereich und einem zweiten Teilbereich des Bauteils in einer ersten Temperierstation,
c) Erwärmen zumindest des ersten Teilbereichs oder des zweiten Teilbereichs des Bauteils in einem zweiten Ofen,
c') Bewegen des Bauteils von dem zweiten Ofen in eine zweite Temperierstation mit einer Transporteinrichtung,
d) Kühlen zumindest eines Teilbereichs des Bauteils in der zweiten Temperierstation,
e) zumindest teilweises Umformen und/oder Kühlen des Bauteils in einem Presshärtewerkzeug.

Die angedeutete Reihenfolge der Verfahrensschritte a), b), c), d) und e) ergibt sich bei einem erfindungsgemäßen Ablauf des Verfahrens. Bevorzugt wird das Verfahren mit einer hier vorgestellten Vorrichtung durchgeführt. Das vorgeschlagene Verfahren dient insbesondere zum Herstellen eines pressgehärteten Bauteils, das mit einer Zink enthaltenden Beschichtung vorbeschichtet und gegebenenfalls (in der Art eines Halbzeugs) insbesondere kalt vorgeformt ist. Der zumindest eine in Verfahrensschritt d) thermisch behandelte Teilbereich kann identisch zu dem ersten oder zweiten Teilbereich sein, zwischen denen in Schritt b) eine Temperaturdifferenz eingestellt wird. Jedoch ist es auch im Rahmen des Verfahrens möglich, andere Teilbereiche in Verfahrensschritt d) thermisch zu behandeln. Dies ist insbesondere dann bevorzugt, wenn das Bauteil keine enheitliche Materialstärke aufweist und/oder zumindest in Teilbereichen beschichtet ist, da so die thermische Behandlung in den Verfahrensschritten b) und d) an die Geometrie des Bauteils angepasst und eine vorliegende Beschichtung schonend erhitzt werden kann. Insbesondere ist es so auch möglich, Teilbereiche unterschiedlicher Festigkeiten auszubilden, deren Geometrie unabhängig von der Materialstärke in diesen Teilbereichen.

Das vorgeschlagene Verfahren erlaubt in besonders vorteilhafter Weise die Herstellung eines pressgehärteten Bauteils mit in Teilbereichen unterschiedlichen Festigkeiten in der industriellen Serienfertigung und kann gleichwohl eine beispielsweise Zink enthaltende (Vor-)Beschichtung des Bauteils schonen. Die unterschiedlichen Festigkeiten werden insbesondere dadurch ermöglicht, dass das in der ersten Temperierstation eine Temperaturdifferenz zwischen zumindest einem ersten Teilbereich und einem zweiten Teilbereich des Bauteils eingestellt wird.

Das Schonen der Beschichtung wird insbesondere dadurch ermöglicht, dass in der zweiten Temperierstation, vor dem Presshärten des Bauteils, zumindest ein Teilbereich des Bauteils (noch einmal) thermisch behandelt, nämlich gekühlt wird.

Bei dem metallischen Bauteil handelt es sich vorzugsweise um eine metallische Platine, ein Stahlblech oder ein zumindest teilweise vorgeformtes Halbzeug. Das metallische Bauteil ist bevorzugt mit beziehungsweise aus einem (härtbaren) Stahl, beispielweise einem Bor-(Mangan-)Stahl, z. B. mit der Bezeichnung 22MnB5, gebildet. Weiter ist das metallische Bauteil mit einer (metallischen) Beschichtung versehen beziehungsweise vorbeschichtet. Bei der metallischen Beschichtung kann es sich beispielsweise um eine (vorrangig) Zink enthaltende Beschichtung oder eine (vorrangig) Aluminium und/oder Silizium enthaltende Beschichtung, insbesondere eine sogenannte Aluminium/Silizium(Al/Si)-Beschichtung handeln.

Nach einer vorteilhaften Ausgestaltung wird vorgeschlagen, dass das Bauteil mit einer (vorrangig) Zink enthaltenden Beschichtung vorbeschichtet ist. Bevorzugt ist das Bauteil zumindest an seiner Oberseite und/oder Unterseit verzinkt. Bevorzugt sind hier Beschichtungen mit einer Dicke von 10 µm [Mikrometern] und mehr, besonders bevorzugt von mehr als 20 µm.

In Schritt a) wird das (ganze) Bauteil in dem ersten Ofen erwärmt. Bevorzugt wird das Bauteil im ersten Ofen homogen, uniform und/oder gleichmäßig aufgeheizt. Weiter bevorzugt wird das Bauteil im ersten Ofen (ausschließlich) mittels Strahlungswärme, beispielsweise von mindestens einem elektrisch betriebenen (das Bauteil nicht körperlich und/oder elektrisch kontaktierendem) Heizelement, wie beispielsweise einer Heizschleife und/oder einem Heizdraht, und/oder von mindestens einem (gasbeheizten) Strahlrohr erwärmt. Vorzugsweise wird das Bauteil in Schritt a) mittels Strahlungswärme und/oder Konvektion um mindestens 500 K [Kelvin], bevorzugt um mindestens 700 K oder sogar um mindestens 800 K erwärmt. Bevorzugt wird das in Schritt a) kontaktlos, insbesondere ohne wärmeleitenden und/oder elektrischen Kontakt zu einem elektrisch betriebenen Heizelement erwärmt.

Vorzugsweise wird das Bauteil in Schritt a) auf eine Temperatur unterhalb der AC3-Temperatur oder sogar unterhalb der AC1-Temperatur erwärmt. Die AC1-Temperatur ist die Temperatur, ab der die Gefügeumwandlung von Ferrit hin zu Austenit bei einem Erwärmen eines metallischen Bauteils, insbesondere Stahlbauteils, beginnt. Die AC3-Temperatur ist die Temperatur, bei der die Gefügeumwandlung von Ferrit hin zu Austenit bei einem Erwärmen eines metallischen Bauteils, insbesondere Stahlbauteils, endet beziehungsweise (vollständig) abgeschlossen ist. Alternativ kann das Bauteil in Schritt a) auf eine Temperatur oberhalb der AC3-Temperatur erwärmt werden.

Bevorzugt wird das Bauteil nach Schritt a) und vor Schritt b) in eine erste Temperierstation bewegt. Hierzu kann eine Transporteinrichtung, beispielsweise zumindest umfassend einen Rollentisch und/oder eine Handhabungseinrichtung, insbesondere einen (Industrie-)Roboter vorgesehen sein. Besonders bevorzugt wird das Bauteil von dem ersten Ofen in die Temperierstation bewegt. Insbesondere legt das Bauteil von dem ersten Ofen bis hin zur Temperierstation eine Wegstrecke von mindestens 0,5 m [Meter] zurück. Hierbei kann das Bauteil im Kontakt mit der Umgebungsluft oder innerhalb einer Schutzatmosphäre geführt werden.

In Schritt b) erfolgt ein Einstellen einer Temperaturdifferenz zwischen zumindest einem ersten Teilbereich und einem zweiten Teilbereich des Bauteils in einer ersten Temperierstation. Es können mehrere erste Teilbereiche sowie mehrere zweite Teilbereiche des Bauteils vorgesehen sein. Bevorzugt erfolgt das Einstellen der Temperaturdifferenz in Schritt b) durch Kühlen des ersten Teilbereichs und/oder Erwärmen des zweiten Teilbereichs des Bauteils. Bevorzugt erfolgt in Schritt b) ein partielles, aktives, konduktives und/oder konvektives Kühlen des ersten Teilbereichs des Bauteils in der Temperierstation. Nach Schritt b) weist das Bauteil partiell unterschiedliche (Bauteil-)Temperaturen auf, wobei eine Temperaturdifferenz zwischen einer ersten Temperatur des ersten Teilbereichs und einer zweiten Temperatur des zweiten Teilbereichs des Bauteils eingestellt ist. Darüber hinaus können in Schritt b) mehrere (verschiedene) Temperaturdifferenzen zwischen Teilbereichen des Bauteils eingestellt werden. So ist es beispielsweise möglich, in dem Bauteil drei oder mehr Teilbereiche mit jeweils voneinander verschiedenen Temperaturen einzustellen.

Bevorzugt findet das Einstellen der Temperaturdifferenz in Schritt b) derart statt, dass eine (erste) Temperatur des ersten Teilbereichs des Bauteils geringer ist als eine (zweite) Temperatur des zweiten Teilbereichs desselben Bauteils. Weiterhin bevorzugt wird in Schritt b) eine Temperaturdifferenz von mindestens 50 K, bevorzugt von mindestens 100 K oder sogar von mindestens 150 K zwischen dem ersten Teilbereich und dem zweiten Teilbereich des Bauteils eingestellt. Bei dem ersten Teilbereich handelt es sich regelmäßig um einen im fertig behandelten Bauteil duktileren Teilbereich beziehungsweise um einen Teilbereich, der eine (im Vergleich zum zweiten Teilbereich) geringere Festigkeit erhält. Bei dem zweiten Teilbereich handelt es sich regelmäßig um einen im fertig behandelten Bauteil im Vergleich dazu härteren Teilbereich beziehungsweise um einen Teilbereich, der eine (im Vergleich zum ersten Teilbereich) höhere Festigkeit erhält.

Wenn in Schritt b) ein (aktives) Kühlen des ersten Teilbereichs vorgesehen ist, erfolgt dieses bevorzugt konvektiv, besonders bevorzugt mittels mindestens einer ein Fluid austragenden Düse. Hierzu kann die Düse in der ersten Temperierstation angeordnet und hin zu dem ersten Teilbereich ausgerichtet sein. Bei dem Fluid kann es sich beispielsweise ein Gas oder ein Gemisch mindestens eines Gases mit mindestens einem weiteren Fluid, bevorzugt einem Gas oder einer Flüssigkeit, handeln. Bevorzugt ist das Fluid Luft, Stickstoff, Wasser oder ein Gemisch von mindestens zwei hiervon. Bevorzugt erfolgt das Kühlen mittels eines Düsenfelds mit mehreren, jeweils ein Fluid austragenden Düsen, wobei besonders bevorzugt die Form des Düsenfelds und/oder die Anordnung der mehreren Düsen an die (zu erzielende) Geometrie des ersten Teilbereichs des Bauteils angepasst ist.

Vorzugsweise kühlt der erste Teilbereich in Schritt b) auf eine Temperatur unterhalb der AC1-Temperatur ab. Besonders bevorzugt wird der erste Teilbereich in Schritt b) auf eine Temperatur unterhalb der AC1-Temperatur (aktiv) gekühlt. Bevorzugt wird der erste Teilbereich in Schritt b) auf eine Temperatur unterhalb von 550°C [Grad Celsius] (823,15 K), besonders bevorzugt unterhalb von 500°C (773,15 K) oder sogar unterhalb von 450°C (723,15 K) gekühlt.

Insbesondere alternativ oder zusätzlich zu einem (aktiven) Kühlen des ersten Teilbereichs, kann das Einstellen der Temperaturdifferenz zwischen dem ersten Teilbereich und dem zweiten Teilbereich des Bauteils (auch) dadurch erfolgen, dass der erste Teilbereich zumindest teilweise thermisch isoliert, getrennt, abgegrenzt und/oder abgeschottet wird. Bevorzug wird der erste Teilbereich (hierbei), insbesondere mittels mindestens einer Abdeckung, Abdeckmasse, Blende und/oder Trennwand, thermisch von dem zweiten Teilbereich und/oder von einer Wärmequelle, wie etwa einem (elektrischen) Heizelement zumindest teilweise isoliert, getrennt, abgegrenzt und/oder abgeschottet.

Bevorzugt erfolgt in Schritt b) in der ersten Temperierstation und/oder gleichzeitig oder zumindest teilweise parallel zu einem (aktiven) Kühlen oder einem passiven Kühlen beziehungsweise Abkühlen-Lassen oder Isolieren des ersten Teilbereichs des Bauteils, ein Eintragen von Wärmeenergie in den zweiten Teilbereich des Bauteils. Vorzugsweise wird der zweite Teilbereich des Bauteils während Schritt b) in der ersten Temperierstation (ausschließlich) mit einer Wärmestrahlung beaufschlagt, die beispielsweise von mindestens einem elektrisch betriebenen beziehungsweise aufgeheizten, insbesondere in der ersten Temperierstation angeordneten, (das Bauteil nicht kontaktierenden) Heizelement, wie beispielsweise einer Heizschleife und/oder einem Heizdraht, und/oder von mindestens einem, insbesondere in der ersten Temperierstation angeordneten, (gasbeheizten) Strahlrohr erzeugt und/oder abgestrahlt wird.

Das Eintragen von Wärmeenergie in den zweiten Teilbereich des Bauteils kann derart erfolgen, dass eine Temperaturabnahme der Temperatur des zweiten Teilbereichs und/oder eine Abkühlgeschwindigkeit des zweiten Teilbereichs während Schritt b) und/oder während des Verbleibs des Bauteils in der ersten Temperierstation zumindest reduziert wird. Diese Verfahrensführung ist insbesondere dann vorteilhaft, wenn das Bauteil in Schritt a) auf eine Temperatur oberhalb der AC3-Temperatur erwärmt wurde. Alternativ kann das Eintragen von Wärmeenergie in den zweiten Teilbereich des Bauteils in der ersten Temperierstation derart erfolgen, dass der zweite Teilbereich des Bauteils (deutlich) erwärmt, insbesondere um mindestens ca. 50 K und/oder auf eine Temperatur, die oberhalb der AC1-Temperatur, insbesondere zwischen der AC1-Temperatur und der AC3-Temperatur liegt aufgeheizt, wird. Diese Verfahrensführung ist insbesondere dann vorteilhaft, wenn das Bauteil in Schritt a) auf eine Temperatur unterhalb der AC3-Temperatur oder sogar unterhalb der AC1-Temperatur erwärmt wurde.

Bevorzugt wird das Bauteil nach Schritt b) und vor Schritt c) in einen zweiten Ofen bewegt. Besonders bevorzugt wird das Bauteil (hierbei) von der ersten Temperierstation in den zweiten Ofen bewegt. Hierzu kann eine Transporteinrichtung, beispielsweise zumindest umfassend einen Rollentisch und/oder eine Handhabungseinrichtung, insbesondere einen (Industrie-)Roboter vorgesehen sein. Bevorzugt legt das Bauteil von der ersten Temperierstation bis hin zu dem zweiten Ofen eine Wegstrecke von mindestens 0,5 m zurück. Hierbei kann das Bauteil im Kontakt mit der Umgebungsluft oder innerhalb einer Schutzatmosphäre geführt werden. Bevorzugt wird das Bauteil unmittelbar nach einer Entnahme aus der ersten Temperierstation direkt in den zweiten Ofen verbracht.

In Schritt c) erfolgt ein Erwärmen zumindest des ersten Teilbereichs oder des zweiten Teilbereichs des Bauteils in einem zweiten Ofen. Vorzugsweise erfolgt in Schritt c) ein Erwärmen zumindest des ersten Teilbereichs des Bauteils in dem zweiten Ofen, bevorzugt um mindestens 50 K, besonders bevorzugt um mindestens 100 K oder sogar um mindestens 150 K.

Besonders bevorzugt wird zumindest der erste Teilbereich des Bauteils im zweiten Ofen (ausschließlich) mittels Strahlungswärme, beispielsweise von mindestens einem elektrisch betriebenen (das Bauteil nicht kontaktierenden) Heizelement, wie beispielsweise einer Heizschleife und/oder einem Heizdraht, und/oder von mindestens einem (gasbeheizten) Strahlrohr erwärmt. Weiter bevorzugt wird, insbesondere gleichzeitig oder zumindest teilweise parallel zum Erwärmen des ersten Teilbereichs, der zweite Teilbereich des Bauteils in dem zweiten Ofen um mindestens 50 K, besonders bevorzugt um mindestens 70 K oder sogar um mindestens 100 K, insbesondere (ausschließlich) mittels Strahlungswärme, erwärmt. Besonders bevorzugt wird der zweite Teilbereich des Bauteils im zweiten Ofen auf eine Temperatur oberhalb der AC1-Temperatur oder sogar oberhalb der AC3-Temperatur erwärmt. Alternativ wird, insbesondere gleichzeitig oder zumindest teilweise parallel zum Erwärmen des ersten Teilbereichs, eine Temperaturabnahme der Temperatur des zweiten Teilbereichs und/oder eine Abkühlgeschwindigkeit des zweiten Teilbereichs während des Verbleibs des Bauteils in dem zweiten Ofen zumindest reduziert.

Mit anderen Worten ausgedrückt kann in Schritt c) ein Eintragen von Wärmeenergie, insbesondere mittels Strahlungswärme, in das gesamte Bauteil erfolgen. Beispielsweise kann hierzu der zweite Ofen einen (ausschließlich) mittels Strahlungswärme beheizbaren Ofeninnenraum aufweisen, in dem vorzugsweise eine (nahezu) einheitliche Innentemperatur einstellbar beziehungsweise eingestellt ist. Das Eintragen von Wärmeenergie in den ersten Teilbereich des Bauteils erfolgt in dem zweiten Ofen vorzugsweise derart, dass die Temperatur des ersten Teilbereichs um mindestens 50 K, bevorzugt um mindestens 100 K, besonders bevorzugt um mindestens 150 K oder sogar um mindestens 200 K erhöht wird.

Das Eintragen von Wärmeenergie in den zweiten Teilbereich des Bauteils kann in dem zweiten Ofen vorzugsweise derart erfolgen, dass eine Temperaturabnahme der Temperatur des zweiten Teilbereichs und/oder eine Abkühlgeschwindigkeit des zweiten Teilbereichs während des Verbleibs des Bauteils in dem zweiten Ofen zumindest reduziert wird. Diese Verfahrensführung ist insbesondere dann vorteilhaft, wenn das Bauteil in Schritt a) auf eine Temperatur oberhalb der AC3-Temperatur erwärmt wurde. Alternativ kann das Eintragen von Wärmeenergie in den zweiten Teilbereich des Bauteils im zweiten Ofen derart erfolgen, dass der zweite Teilbereich des Bauteils zumindest (deutlich) erwärmt, insbesondere um mindestens 50 K, besonders bevorzugt um mindestens 70 K oder sogar um mindestens 100 K; und/oder auf eine Temperatur oberhalb der AC1-Temperatur oder sogar oberhalb der AC3-Temperatur aufgeheizt wird. Diese Verfahrensführung ist insbesondere dann vorteilhaft, wenn das Bauteil in Schritt a) auf eine Temperatur unterhalb der AC3-Temperatur oder sogar unterhalb der AC1-Temperatur erwärmt wurde.

Erfindungsgemäß wird das Bauteil nach Schritt c) und vor Schritt d) in eine zweite Temperierstation bewegt. Das Bauteil wird (hierbei) von dem zweiten Ofen in die zweiten Temperierstatioin bewegt. Hierzu ist eine Transporteinrichtung, beispielsweise zumindest umfassend einen Rollentisch und/oder eine Handhabungseinrichtung, insbesondere einen (Industrie-)Roboter vorgesehen. Bevorzugt legt das Bauteil von dem zweiten Ofen bis hin zu der zweiten Temperierstation eine Wegstrecke von mindestens 0,5 m zurück. Hierbei kann das Bauteil im Kontakt mit der Umgebungsluft oder innerhalb einer Schutzatmosphäre geführt werden. Bevorzugt wird das Bauteil unmittelbar nach einer Entnahme aus dem zweiten Ofen direkt in die zweite Temperierstation verbracht.

In Schritt d) erfolgt ein Kühlen zumindest eines Teilbereichs des Bauteils in einer zweiten Temperierstation. In Abhängigkeit von der Ausgestaltung des Bauteils und den zu erzielenden Festigkeitseigenschaften kann der zweite Teilbereich (teil-)identisch zu einem ersten ersten oder ersten zweiten Teilbereich sein. Es ist aber auch möglich, dass der zumindest eine Teilbereich in Schritt d) ein anderer ist als die ersten oder zweiten Teilbereiche, zwischen denen in Schritt b) eine Temperaturdifferenz eingestellt wurde. Bevorzugt erfolgt in Schritt d) ein thermisches Behandeln zumindest des ersten Teilbereichs oder des zweiten Teilbereichs des Bauteils in der zweiten Temperierstation. Besonders bevorzugt erfolgt in Schritt d) ein (aktives) Kühlen (zumindest) des zweiten Teilbereichs des Bauteils. Zusätzlich kann in Schritt d) ein Erwärmen des ersten Teilbereichs des Bauteils erfolgen. Vorzugsweise werden in Schritt d) der erste Teilbereich und der zweite Teilbereich des Bauteils (aktiv) gekühlt. Bevorzugt erfolgt in Schritt d) ein partielles, aktives, konduktives und/oder konvektives Kühlen zumindest des zweiten Teilbereichs des Bauteils in der zweiten Temperierstation.

Das (aktive) Kühlen des Teilbereichs des Bauteils in Schritt d) erfolgt bevorzugt konvektiv, besonders bevorzugt mittels mindestens einer ein Fluid austragenden Düse. Hierzu kann die Düse in der zweiten Temperierstation angeordnet und hin zu dem jeweiligen Teilbereich des Bauteils ausgerichtet sein. Bei dem Fluid kann es sich beispielsweise ein Gas oder ein Gemisch mindestens eines Gases mit mindestens einem weiteren Fluid, bevorzugt einem Gas oder einer Flüssigkeit, handeln. Bevorzugt ist das Fluid Luft, Stickstoff, Wasser oder ein Gemisch von mindestens zwei hiervon. Bevorzugt erfolgt das Kühlen mittels eines Düsenfelds mit mehreren, jeweils ein Fluid austragenden Düsen, wobei besonders bevorzugt die Form des Düsenfelds und/oder die Anordnung der mehreren Düsen an die Geometrie des betreffenden Teilbereichs des Bauteils angepasst ist.

Vorzugsweise kühlt der zweite Teilbereich in Schritt d) auf eine Temperatur unterhalb der AC1-Temperatur ab. Besonders bevorzugt wird der zweite Teilbereich in Schritt d) auf eine Temperatur unterhalb der AC1-Temperatur (aktiv) gekühlt. Bevorzugt wird der zweite Teilbereich in Schritt d) auf eine Temperatur im Bereich von 500°C bis 600°C, bevorzugt im Bereich von 520°C bis 560°C gekühlt. Dieser Temperaturbereich ist besonders vorteilhaft, um in dem (nachfolgenden) Presshärteschritt e) eine Rissbildung einer vorgesehenen Beschichtung des Bauteils möglichst zu vermeiden.

Insbesondere zusätzlich zu einem aktiven Kühlen des zweiten Teilbereichs, kann in Schritt d) in der zweiten Temperierstation ein passives Kühlen oder Abkühlen-Lassen des ersten Teilbereichs des Bauteils erfolgen. Besonders bevorzugt ist jedoch, wenn in Schritt d) in der zweiten Temperierstation ein gleichzeitiges oder zumindest teilweise paralleles aktives Kühlen des ersten Teilbereichs und des zweiten Teilbereich desselben Bauteils, insbesondere jeweils mittels mindestens einer ein Fluid austragenden Düse erfolgt. Bevorzugt werden (hierbei) der erste Teilbereich und der zweite Teilbereich in Schritt d) auf eine Temperatur im Bereich von 500°C bis 600°C, bevorzugt im Bereich von 520°C bis 560°C gekühlt.

Bevorzugt erfolgt in Schritt d) in der zweiten Temperierstation und/oder gleichzeitig oder zumindest teilweise parallel zu einem (aktiven) Kühlen des zweiten Teilbereichs des Bauteils, ein Eintragen von Wärmeenergie in den ersten Teilbereich des Bauteils. Vorzugsweise wird der erste Teilbereich des Bauteils während Schritt d) in der zweiten Temperierstation (ausschließlich) mit einer Wärmestrahlung beaufschlagt, die beispielsweise von mindestens einem elektrisch betriebenen beziehungsweise aufgeheizten, insbesondere in der zweiten Temperierstation angeordneten, (das Bauteil nicht kontaktierenden) Heizelement, wie beispielsweise einer Heizschleife und/oder einem Heizdraht, und/oder von mindestens einem, insbesondere in der zweiten Temperierstation angeordneten, (gasbeheizten) Strahlrohr erzeugt und/oder abgestrahlt wird. Das Eintragen von Wärmeenergie in den ersten Teilbereich des Bauteils kann derart erfolgen, dass eine Temperaturabnahme der Temperatur des ersten Teilbereichs und/oder eine Abkühlgeschwindigkeit des ersten Teilbereichs während Schritt d) und/oder während des Verbleibs des Bauteils in der zweiten Temperierstation zumindest reduziert wird. Dies ist insebesondere dann vorteilhaft, wenn der erste Teilbereich eine geringere Materialstärke als der zweite Teilbereich aufweist.

Nach einer vorteilhaften Ausgestaltung wird vorgeschlagen, dass das Bauteil zumindest zwei Teilbereiche mit voneinander verschiedener Materialstärke aufweist. Hierbei kann der erste Teilbereich eine geringere Materialstärke als der zweite Teilbereich des Bauteils aufweisen. Alternativ kann der zweite Teilbereich eine geringere Materialstärke als der erste Teilbereich des Bauteils aufweisen. Die verschiedenen Materialstärken können beispielsweise dadurch erreicht werden, dass das Bauteil als sogenanntes "Tailor Rolled Blank" (TRB), "Tailor Welded Blank" (TWB) oder "Gepatchtes Blech" bereitgestellt wird. Ein "Tailor Rolled Blank" wird beispielsweise dadruch erzeugt, dass eine Platine durch ein Walzverfahren auf unterschiedliche Dicken gewalzt wird. Ein "Tailor Welded Blank" wird beispielsweise dadruch erzeugt, dass einzelne Segmente unterschiedlicher Dicke und/oder unterschiedlicher Werkstoffeigenschaften zu einer Platine zusammengesetzt, etwa thermisch gefügt werden. Ein "Gepatchtes Blech" bezeichnet in diesem Zusammenhang ein Blech, auf dem zusätzliche Bleche aufgesetzt sind.

Wenn zumindest zwei Teilbereiche mit voneinander verschiedener Materialstärke beziehungsweise Dicke vorgesehen sind, ist es weiterhin vorteilhaft, wenn in Schritt d) die zumindest zwei Teilbereiche mit voneinander verschiedener Materialstärke unterschiedlich thermisch behandelt werden. Bevorzugt wird ein Teilbereich, der eine geringere Materialstärke aufweist als ein anderer Teilbereich, weniger (stark) gekühlt als der andere (dickere) Teilbereich. Hierbei kann in dem Teilbereich mit vergleichsweise geringerer Materialstärke eine geringere Abkühlgeschwindigkeit eingestellt werden.

Bevorzugt werden in Schritt d) die Teilbereich mit voneinander verschiedener Materialstärke jeweils auf eine Temperatur im Bereich von 500°C bis 600°C, bevorzugt im Bereich von 520°C bis 560°C gebracht, insbesondere (aktiv oder passiv) gekühlt. Insbesondere zusätzlich zu einem aktiven Kühlen eines Teilbereichs mit vergleichsweise größerer Materialstärke, kann in Schritt d) in der zweiten Temperierstation ein passives Kühlen oder Abkühlen-Lassen eines Teilbereichs mit vergleichsweise geringerer Materialstärke erfolgen. Besonders bevorzugt ist jedoch, wenn in Schritt d) in der zweiten Temperierstation ein gleichzeitiges oder zumindest teilweise paralleles aktives Kühlen der zumindest zwei Teilbereiche mit voneinander verschiedener Materialstärke, insbesondere jeweils mittels mindestens einer ein Fluid austragenden Düse erfolgt.

Bevorzugt erfolgt in Schritt d) in der zweiten Temperierstation und/oder gleichzeitig oder zumindest teilweise parallel zu einem (aktiven) Kühlen eines Teilbereichs mit vergleichsweise größerer Materialstärke, ein Eintragen von Wärmeenergie in einen Teilbereich mit vergleichsweise geringerer Materialstärke. Vorzugsweise wird der Teilbereich mit vergleichsweise geringerer Materialstärke während Schritt d) in der zweiten Temperierstation (ausschließlich) mit einer Wärmestrahlung beaufschlagt, die beispielsweise von mindestens einem elektrisch betriebenen beziehungsweise aufgeheizten, insbesondere in der zweiten Temperierstation angeordneten, (das Bauteil nicht kontaktierenden) Heizelement, wie beispielsweise einer Heizschleife und/oder einem Heizdraht, und/oder von mindestens einem, insbesondere in der zweiten Temperierstation angeordneten, (gasbeheizten) Strahlrohr erzeugt und/oder abgestrahlt wird. Das Eintragen von Wärmeenergie in den Teilbereich mit vergleichsweise geringerer Materialstärke kann derart erfolgen, dass eine Temperaturabnahme der Temperatur des Teilbereichs mit vergleichsweise geringerer Materialstärke und/oder eine Abkühlgeschwindigkeit des Teilbereichs mit vergleichsweise geringerer Materialstärke während Schritt d) und/oder während des Verbleibs des Bauteils in der zweiten Temperierstation zumindest reduziert wird.

Nach einer vorteilhaften Ausgestaltung wird vorgeschlagen, dass in Schritt d) lokal voneinander verschiedene Bauteiltemperaturen aneinander angeglichen werden. Geringe Temperaturunterschiede im Bauteil zu Beginn des Presshärtens können zur Reduzierung des Bauteilsverzugs während des Presshärtens beitragen. Bevorzugt wird in Schritt d) das gesamte Bauteil auf eine Temperatur im Bereich von 500°C bis 600°C, bevorzugt im Bereich von 520°C bis 560°C gekühlt, bevor das Bauteil dem Presshärtewerkzeug zugeführt wird.

Nach einer weiteren vorteilhaften Ausgestaltung wird vorgeschlagen, dass in Schritt d) der erste Teilbereich und der zweite Teilbereich des Bauteils auf im Wesentlichen dieselbe Bauteiltemperatur abgekühlt werden, bevor das Bauteil dem Presshärtewerkzeug zugeführt wird. "Im Wesentlichen dieselbe" bedeutet in diesem Zusammenhang insbesondere einen maximalen Temperaturunterschied von 100 K, bevorzugt höchstens 40 K. Bevorzugt werden (hierbei) der erste Teilbereich und der zweite Teilbereich in Schritt d) auf eine Temperatur im Bereich von 500°C bis 600°C, bevorzugt im Bereich von 520°C bis 560°C gekühlt, bevor das Bauteil dem Presshärtewerkzeug zugeführt wird.

Bevorzugt wird das Bauteil nach Schritt d) und vor Schritt e) von der zweiten Temperierstation in das Presshärtewerkzeug bewegt. Das Bewegen von der zweiten Temperierstation in das Presshärtewerkzeug erfolgt mittels einer Transporteinrichtung, beispielsweise zumindest umfassend einen Rollentisch und/oder eine Handhabungseinrichtung, insbesondere einen (Industrie-)Roboter. Besonders bevorzugt legt das Bauteil von der zweiten Temperierstation bis hin zu dem Presshärtewerkzeug eine Wegstrecke von mindestens 0,5 m zurück. Hierbei kann das Bauteil im Kontakt mit der Umgebungsluft oder innerhalb einer Schutzatmosphäre geführt werden. Bevorzugt wird das Bauteil unmittelbar nach einer Entnahme aus der zweiten Temperierstation direkt in das Presshärtewerkzeug verbracht.

In Schritt e) erfolgt ein zumindest teilweises Umformen und/oder Kühlen des Bauteils in einem Presshärtewerkzeug. Bevorzugt wird das Bauteil in dem Presshärtewerkzeug gleichzeitig oder zumindest teilweise parallel umgeformt und gekühlt. Wenn das Bauteil vorgeformt bereitgestellt wird, erfogt in dem Presshärtewerkzeug regelmäßig eine vergleichsweise geringe Umformung beziehungsweise Endformgebung.

In einer alternativ bevorzugten Verfahrensführung erfolgt in Schritt a) eine homogene Aufheizung des Bauteils auf eine Temperatur oberhalb der AC3-Temperatur, während in Schritt b) der mindestens eine erste Teilbereich signifikant abgekühlt, bevorzugt bis zu einer Abkühlstopptemperabur oberhalb der Martensitstarttemperatur, wird, während der mindestens eine zweite Teilbereich nur mäßig abgekühlt wird. Bevorzugt kann der mindestens eine zweite Teilbereich geheizt werden, um das Abkühlen dieses zweiten Teilbereichs zu verhindern oder zu verzögern. Nach dem erneuten Aufheizen in Schritt c) erfolgt in Schritt d) eine gezielte thermische Behandlung, bei der durch die Wahl insbesondere der entpsrechenden Teilbereiche und die entsprechende thermische Behandlung insbesondere Kühlung, insbesondere unter Berücksichtigung unterschiedlicher Materialdicken, eine Verfahrensführung erreicht werden kann, bei der nach Beendigung von Schritt d) eine möglichst homogene Temperatur des Bauteils vorliegt, so dass auch bei beschichteten Bauteilen mit nicht homogener Materialstärke in Schritt e) ein Presshärten durchgeführt werden kann, ohne dass es zu einer Rissbildung in der entsprechenden Beschichtung kommt. Im übrigen wird auf die oben gemachten Ausführungen verwiesen.

Nach einem weiteren Aspekt wird eine Vorrichtung zur Wärmebehandlung nach dem Anspruch 7 vorgeschlagen.

Die genannten Komponenten der Vorrichtung sind in der Reihenfolge: erster Ofen, erste Temperierstation, zweiter Ofen , zweite Temperierstation, Persshärtewerkzeug, vorzugsweise geradlinig hintereinander angeordnet. Vorteilhafterweise sind die geannten Komponenten der Vorrichtung jeweils getrennt voneinander und/oder beabstandet zueinander angeordnet.

Bevorzugt ist zumindest der erste Ofen oder der zweite Ofen mittels Strahlungswärme und/oder Konvektion beheizbar. Darüber hinaus ist bevorzugt, dass der zweite Ofen dazu vorgesehen und eingerichtet ist zumindest den ersten Teilbereich des Bauteils um mindestens 50 K, bevorzugt um mindestens 100 K, besonders bevorzugt um mindestens 150 K oder sogar um mindestens 200 K zu erwärmen.

Weiterhin bevorzugt ist zumindest der erste Ofen oder der zweite Ofen ein Durchlaufofen oder ein Kammerofen. Bevorzugt ist der erste Ofen ein Durchlaufofen, insbesondere ein Rollenherdofen. Besonders bevorzugt ist der zweite Ofen ein Durchlaufofen, insbesondere ein Rollenherdofen, oder ein Kammerofen, insbesondere ein Mehrlagenkammerofen mit mindestens zwei oder mindestens drei übereinander angeordneten Kammern.

Der zweite Ofen ist der ersten Temperierstation nachgeordnet. Bevorzugt weist der zweite Ofen einen, insbesondere (ausschließlich) mittels Strahlungswärme beheizbaren, Ofeninnenraum auf, in dem vorzugsweise eine (nahezu) einheitliche Innentemperatur einstellbar beziehungsweise eingestellt ist. Insbesondere wenn der zweite Ofen als Mehrlagenkammerofen ausgeführt ist, können, entsprechend der Anzahl der Kammern, mehrere solcher Ofeninnenräume vorhanden sein.

Bevorzugt sind in dem ersten Ofen und/oder in dem zweiten Ofen (ausschließlich) Strahlungswärmequellen angeordnet. Besonders bevorzugt ist in einem Ofeninnenraum des ersten Ofens und/oder in einem Ofeninnenraum des zweiten Ofens mindestens ein elektrisch betriebenes (das Bauteil nicht kontaktierende) Heizelement, wie beispielsweise mindestens eine elektrisch betriebene Heizschleife und/oder mindestens ein elektrisch betriebener Heizdraht angeordnet. Alternativ oder zusätzlich kann in dem Ofeninnenraum des ersten Ofens und/oder dem Ofeninnenraum des zweiten Ofens mindestens ein insbesondere gasbeheiztes Strahlrohr angeordnet sein. Vorzugsweise sind in dem Ofeninnenraum des ersten Ofens und/oder dem Ofeninnenraum des zweiten Ofens mehrere Strahlrohrgasbrenner beziehungsweise Strahlrohre angeordnet, in die jeweils mindestens ein Gasbrenner hineinbrennt. Hierbei ist es besonders vorteilhaft, wenn der innere Bereich der Strahlrohre, in den die Gasbrenner hineinbrennen, atmosphärisch von dem Ofeninnenraum getrennt ist, so dass keine Verbrennungsgase oder Abgase in den Ofeninnenraum gelangen und somit die Ofenatmosphäre beeinflussen können. Eine solche Anordnung wird auch als "indirekte Gasbeheizung" bezeichnet.

Erfindungsgemäß ist die erste Temperierstation dem ersten Ofen nachgeordnet. In der ersten Temperierstation kann mindestens eine Düse angeordnet beziehungsweise gehalten sein, die zum Austragen eines Fluids vorgesehen und eingerichtet ist. Vorzugsweise ist die mindestens eine Düse zum Austragen eines Fluids zum Kühlen des ersten Teilbereichs des Bauteils vorgesehen und eingerichtet. So ist eine Temperaturdifferenz zwischen dem ersten Teilbereich und einem zweiten Teilbereich des Bauteils besonders vorteilhaft einstellbar. Besonders bevorzugt ist die mindestens eine Düse derart ausgerichtet, dass sie das Fluid hin zu dem ersten Teilbereich des Bauteils austragen kann. Weiter bevorzugt ist in der ersten Temperierstation ein Düsenfeld mit mehreren Düsen angeordnet, wobei die Düsen jeweils zum Austragen eines Fluids vorgesehen und eingerichtet sind. Besonders bevorzugt ist eine Form des Düsenfelds und/oder eine Anordnung der mehreren Düsen an die (zu erzielende) Geometrie des ersten Teilbereichs des Bauteils angepasst.

Bevorzugt ist in der ersten Temperierstation mindestens eine Erwärmungseinrichtung angeordnet. Vorzugsweise ist die Erwärmungseinrichtung dazu vorgesehen und eingerichtet, Wärmeenergie in den zweiten Teilbereich des Bauteils einzutragen. Besonders bevorzugt ist die Erwärmungseinrichtung derart in der ersten Temperierstation angeordnet und/oder ausgerichtet, dass das Eintragen von Wärmeenergie in den zweiten Teilbereich des Bauteils gleichzeitig oder zumindest teilweise parallel zu dem Kühlen des ersten Teilbereichs des Bauteils mittels der mindestens einen Düse ausführbar ist. Bevorzugt umfasst die Erwärmungseinrichtung (ausschließlich) mindestens eine Strahlungswärmequelle. Besonders bevorzugt ist die mindestens eine Strahlungswärmequelle mit mindestens einem elektrisch betriebenen (das Bauteil nicht (mechanisch und/oder elektrisch) kontaktierenden) Heizelement, wie beispielsweise mindestens einer elektrisch betriebenen Heizschleife und/oder mindestens einem elektrisch betriebenen Heizdraht gebildet. Alternativ oder zusätzlich kann als Strahlungswärmequelle mindestens ein gasbeheiztes Strahlrohr vorgesehen sein.

Erfindungsgemäß ist die zweite Temperierstation dem zweiten Ofen nachgeordnet. In der zweiten Temperierstation kann mindestens eine Düse angeordnet beziehungsweise gehalten sein, die zum Austragen eines Fluids vorgesehen und eingerichtet ist. Vorzugsweise ist die mindestens eine Düse zum Austragen eines Fluids zum Kühlen zumindest eines Teilbereichs, insbesondere des zweiten Teilbereichs des Bauteils und/oder zumindest eines Teilbereichs des Bauteils mit vergleichsweise größerer Materialstärke vorgesehen und eingerichtet. Besonders bevorzugt ist die mindestens eine Düse derart ausgerichtet, dass sie das Fluid zumindest hin zu dem Teilbereich, insbesondere hin zu dem zweiten Teilbereich des Bauteils und/oder zumindest hin zu einem Teilbereich des Bauteils mit vergleichsweise größerer Materialstärke austragen kann. Weiter bevorzugt ist in der zweiten Temperierstation ein Düsenfeld mit mehreren Düsen angeordnet, wobei die Düsen jeweils zum Austragen eines Fluids vorgesehen und eingerichtet sind. Besonders bevorzugt ist eine Form des Düsenfelds und/oder eine Anordnung der mehreren Düsen an die Geometrie des Teilbereichs, insbesondere des zweiten Teilbereichs des Bauteils und/oder eines Teilbereichs des Bauteils mit vergleichsweise größerer Materialstärke angepasst.

Bevorzugt ist in der zweiten Temperierstation mindestens eine Erwärmungseinrichtung angeordnet. Vorzugsweise ist die Erwärmungseinrichtung dazu vorgesehen und eingerichtet, Wärmeenergie in den ersten Teilbereich des Bauteils und/oder in einen Teilbereichs des Bauteils mit vergleichsweise geringerer Materialstärke einzutragen. Besonders bevorzugt ist die Erwärmungseinrichtung derart in der zweiten Temperierstation angeordnet und/oder ausgerichtet, dass das Eintragen von Wärmeenergie in den ersten Teilbereich des Bauteils und/oder in einen Teilbereich des Bauteils mit vergleichsweise geringerer Materialstärke gleichzeitig oder zumindest teilweise parallel zu dem Kühlen des Teilbereichs, insbesondere des zweiten Teilbereichs des Bauteils und/oder eines Teilbereichs des Bauteils mit vergleichsweise größerer Materialstärke mittels der mindestens einen Düse ausführbar ist. Bevorzugt umfasst die Erwärmungseinrichtung (ausschließlich) mindestens eine Strahlungswärmequelle. Besonders bevorzugt ist die mindestens eine Strahlungswärmequelle mit mindestens einem elektrisch betriebenen (das Bauteil nicht (mechanisch und/oder elektrisch) kontaktierenden) Heizelement, wie beispielsweise mindestens einer elektrisch betriebenen Heizschleife und/oder mindestens einem elektrisch betriebenen Heizdraht gebildet. Alternativ oder zusätzlich kann als Strahlungswärmequelle mindestens ein gasbeheiztes Strahlrohr vorgesehen sein.

Nach einer vorteilhaften Ausgestaltung wird vorgeschlagen, dass die zweite Temperierstation dazu vorgesehen und eingerichtet ist, in voneinander verschiedenen Teilbereichen des Bauteils unterschiedliche Abkühlraten einzustellen. Hierzu können mindestens zwei Düsen in der zweiten Temperierstation angeordnet sein, die mit voneinander verschiedenen Luftmassenströmen betrieben werden. Alternativ oder zusätzlich kann die mindestens eine Erwärmungseinrichtung zum Einstellen der unterschiedlichen Abkühlraten beitragen.

Erfindungsgemäß ist das Presshärtewerkzeug der zweiten Temperierstation nachgeordnet. Dass Presshärtewerkzeug ist insbesondere dazu vorgesehen und eingerichtet, das Bauteil gleichzeitig oder zumindest teilweise parallel umzuformen und (zumindest teilweise) zu kühlen, insbesondere abzuschrecken. Hierzu kann das Presshärtewerkzeug über mindestens zwei aufeinander zu bewegbare und/oder zumindest teilweise gekühlte Schalen (beispielsweise in der Art eines Stempels und einer Matrize) verfügen.

Bevorzugt dient die Vorrichtung zur Durchführung eines hier vorgeschlagenen Verfahrens. Nach einer vorteilhaften Ausgestaltung wird vorgeschlagen, dass die Vorrichtung zum Ausüben eines hier vorgeschlagenen Verfahrens vorgesehen und eingerichtet ist.

Die im Zusammenhang mit dem Verfahren erörterten Details, Merkmale und vorteilhaften Ausgestaltungen können entsprechend auch bei der hier vorgestellten Vorrichtung auftreten und umgekehrt. Insoweit wird auf die dortigen Ausführungen zur näheren Charakterisierung der Merkmale vollumfänglich Bezug genommen.

Nach einem weiteren Aspekt wird eine Verwendung einer hier vorgeschlagenen Vorrichtung zum thermischen Behandeln eines mit einer Zink enthaltenden Beschichtung vorbeschichteten metallische Bauteils vorgeschlagen.

Die im Zusammenhang mit dem Verfahren und/oder der Vorrichtung erörterten Details, Merkmale und vorteilhaften Ausgestaltungen können entsprechend auch bei der hier vorgestellten Verwendung auftreten und umgekehrt. Insoweit wird auf die dortigen Ausführungen zur näheren Charakterisierung der Merkmale vollumfänglich Bezug genommen.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: ein Schaubild einer erfindungsgemäßen Vorrichtung zur Wärmebehandlung eines metallischen Bauteils;
- Fig. 2:: einen mittels einer erfindungsgemäßen Vorrichtung und/oder einerm erfindungsgemäßen Verfahren erzielbaren Temperatur-Zeit-Verlauf; und
- Fig. 3: ein Beispiel eines Bauteils mit Teilbereichen verschiedener Materialstärke (Dicke) im Schnitt.

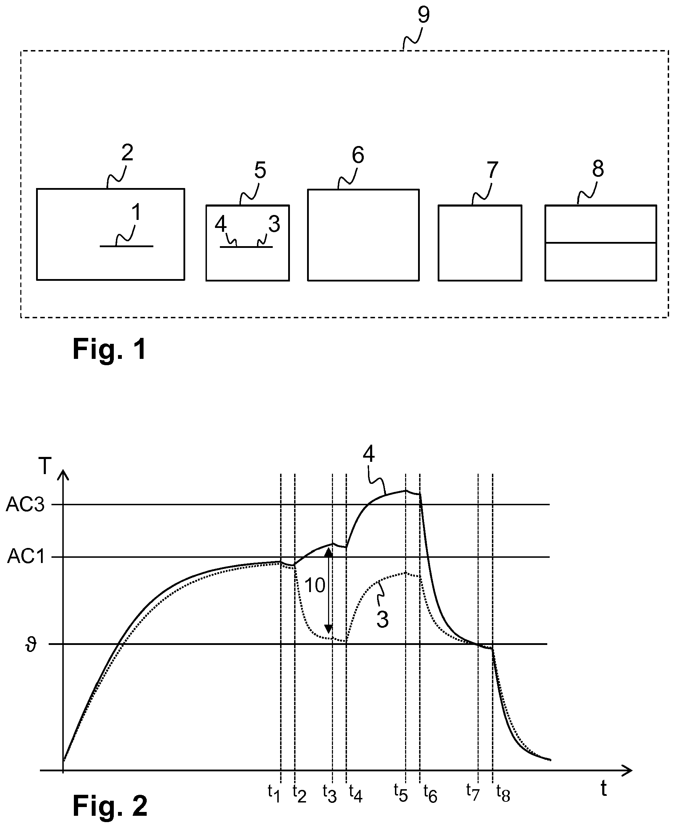

Fig. 1 zeigt schematisch ein Schaubild einer erfindungsgemäßen Vorrichtung 9 zur Wärmebehandlung eines metallischen Bauteils 1. Die Vorrichtung 9 weist einen ersten Ofen 2, eine erste Temperierstation 5, einen zweiten Ofen 6, eine zweite Temperierstation 7 und ein Presshärtewerkzeug 8 auf. Die Vorrichtung 9 stellt hier eine Warmformlinie für das Presshärten dar. Die erste Temperierstation 5 ist dem ersten Ofen 2 (direkt) nachgeordnet, sodass ein mittels der Vorrichtung 9 zu behandelndes Bauteil 1 nach Verlassen des ersten Ofens 2 direkt in die erste Temperierstation 5 verbracht werden kann. Ferner sind der zweite Ofen 6 der ersten Temperierstation 5, die zweite Temperierstation 7 dem zweiten Ofen 6 und das Presshärtewerkzeug 8 der zweiten Temperierstation 7 (direkt) nachgeordnet. Die erste Temperierstation 5 ist dazu vorgesehen und eingerichtet, eine Temperaturdifferenz zwischen zumindest einem ersten Teilbereich 3 und einem zweiten Teilbereich 4 des Bauteils 1 einzustellen.

Fig. 2 zeigt schematisch einen mittels einer erfindungsgemäßen Vorrichtung 9 und/oder einem erfindungsgemäßen Verfahren erzielbaren Temperatur-Zeit-Verlauf. Hierin ist die Temperatur T des metallischen Bauteils beziehungsweise sind die Temperaturen T des ersten Teilbereichs 3 (punktierte Linie) und des zweiten Teilbereichs 4 (durchgezogene Linie) des Bauteils 1 über der Zeit t aufgetragen. Das metallische Bauteil 1 ist hier beispielhaft mit einer Zink enthaltenden Beschichtung vorbeschichtet, weist diese also bereits vor Eintritt in den ersten Ofen 2 auf.

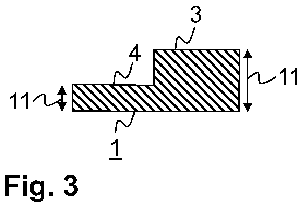

Gemäß dem in Fig. 2 gezeigten Temperatur-Zeit-Verlauf wird das metallische Bauteil zunächst, bis zum Zeitpunkt t₁ uniform auf eine Temperatur unterhalb der AC1-Temperatur erwärmt. Ein erster Teilbereich 3 des Bauteils weist hier beispielhaft eine größere Materialstärke auf als ein zweiter Teilbereich 4 des Bauteils (wie auch in Fig. 3 gezeigt), sodass die Temperatur im zweiten Teilbereich 4 (durchgezogene Linie) schneller ansteigt als im ersten Teilbereich 3 (punktierte Linie). Dieses Erwärmen erfolgt in einem ersten Ofen. Zwischen den Zeitpunkten t₁ und t₂ wird das metallische Bauteil von dem ersten Ofen in eine erste Temperierstation transferiert. Hierbei kann die Bauteiltemperatur, beispielsweise durch Wärmeabgabe an die Umgebung leicht abnehmen.

Zwischen den Zeitpunkten t₂ und t₃ wird der erster Teilbereich 3 des Bauteils in der ersten Temperierstation (aktiv) gekühlt. Dies ist in Fig. 2 anhand des unteren, punktierten Temperatur-Zeit-Verlaufs zwischen den Zeitpunkten t₂ und t₃ veranschaulicht. Parallel wird der zweite Teilbereich 4 des Bauteils in der ersten Temperierstation (leicht) erwärmt, sodass er die AC1-Temperatur überschreitet. Dies ist in Fig. 2 anhand des oberen, durchgezogenen Temperatur-Zeit-Verlaufs zwischen den Zeitpunkten t₂ und t₃ veranschaulicht. So wird in der ersten Temperierstation eine Temperaturdifferenz 10 zwischen dem ersten Teilbereich 3 und dem zweiten Teilbereich 4 des Bauteils eingestellt.

Zwischen den Zeitpunkten t₃ und t₄ wird das Bauteil von der ersten Temperierstation in einen sich von dem ersten Ofen unterscheidenden zweiten Ofen transferiert. Hierbei können die in der ersten Temperierstation eingestellten, partiell unterschiedlichen Temperaturen, beispielsweise durch Wärmeabgabe an die Umgebung leicht abnehmen.

Vom Zeitpunkt t₄ bis zum Zeitpunkt t₅ wird das Bauteil in dem zweiten Ofen derart erwärmt, dass die Temperatur des ersten Teilbereichs 3 des Bauteils um mindestens 150 K erhöht wird. Zudem erfolgt das Erwärmen im zweiten Ofen derart, dass gleichzeitig die Temperatur des zweiten Teilbereichs 4 des Bauteils auf eine Temperatur oberhalb der AC3-Temperatur gebracht wird, beispielhaft im Bereich von 870°C bis 910°C.

Zwischen den Zeitpunkten t₅ und t₆ wird das Bauteil von dem zweiten Ofen in eine sich von der ersten Temperierstation unterscheidende zweite Temperierstation transferiert. Hierbei können die in dem zweiten Ofen eingestellten, partiell unterschiedlichen Temperaturen, beispielsweise durch Wärmeabgabe an die Umgebung leicht abnehmen.

Vom Zeitpunkt t₆ bis zum Zeitpunkt t₇ werden der erste Teilbereich 3 und der zweite Teilbereich 4 des Bauteils in der zweiten Temperierstation derart (unterschiedlich) thermisch behandelt, hier beispielhaft (in der Art einer Vorkühlung) unterschiedlich stark gekühlt, dass der erste Teilbereich 3 und der zweite Teilbereich 4 des Bauteils 1 auf im Wesentlichen dieselbe Bauteiltemperatur ϑ abgekühlt werden, bevor das Bauteil einem Presshärtewerkzeug zugeführt wird. Die Bauteiltemperatur ϑ liegt hier beispielhaft im Bereich von 520°C bis 560°C. Dieser Temperaturbereich ist besonders vorteilhaft, um in dem nachfolgenden Presshärteschritt eine Rissbildung der Zink enthaltenden Beschichtung des Bauteils möglichst zu vermeiden. Zudem kann durch das Verbringen der Teilbereiche 3, 4 auf dieselbe Bauteiltemperatur vorteilhaft erreicht werden, dass ein Bauteilverzug während des Presshärtens zumindest reduziert wird.

Zwischen den Zeitpunkten t₇ und t₈ wird das Bauteil von der zweiten Temperierstation in das Presshärtewerkzeug transferiert. Hierbei kann die in der zweiten Temperierstation eingestellte Bauteiltemperatur leicht abnehmen.

Ab dem Zeitpunkt t₈ bis zu einem Prozessende erfolgt ein Abschrecken des (gesamten) Bauteils in dem Presshärtewerkzeug. Hierbei kann sich in dem zweiten Teilbereich 4 des Bauteils ein zumindest teilweise oder sogar mehrheitlich martensitisches Gefüge einstellen, das eine vergleichsweise hohe Festigkeit und eine vergleichsweise geringe Duktilität aufweist. In dem ersten Teilbereich 3 des Bauteils hat im Wesentlichen keine oder nur eine vergleichsweise geringe Gefügeumwandlung stattgefunden, da der erste Teilbereich 3 des Bauteils zu keinem Zeitpunkt des Prozesses die AC3-Temperatur überschritten hat, sodass in dem ersten Teilbereich 3 des Bauteils ein mehrheitlich ferritisches Gefüge verbleibt, das eine vergleichsweise geringe Festigkeit und eine vergleichsweise hohe Duktilität aufweist.

Fig. 3 zeigt exemplarisch ein Bauteil 1 im Schnitt mit einem ersten Teilbereich 3 und einem zweiten Teilbereich 4. Der erste Teilbereich 3 weist dabei eine Materialstärke 11 auf die größer ist als die Materialstärke 11 des zweiten Teilbereichs 4.

Es werden ein Verfahren und eine Vorrichtung zur Wärmebehandlung eines metallischen Bauteils angegeben, die die mit Bezug auf den Stand der Technik geschilderten Probleme zumindest teilweise lösen. Insbesondere erlauben das Verfahren und die Vorrichtung die Herstellung eines pressgehärteten Bauteils mit in Teilbereichen unterschiedlichen Festigkeiten in der industriellen Serienfertigung und schonen gleichwohl eine beispielsweise Zink enthaltende (Vor-)Beschichtung des Bauteils. Zudem sind das Verfahren und die Vorrichtung möglichst energiekostenschonend ausführbar bzw. betreibbar und/oder möglichst investitionskostenschonend realisierbar bzw. herstellbar. Darüber hinaus erlauben das Verfahren sowie die Vorrichtung insbesondere eine möglichst geringe Taktzeit.

## Patentansprüche

1. Verfahren zur Wärmebehandlung eines vorbeschichteten metallischen Bauteils (1) mit zumindest folgenden Schritten, welche in der angegebenen Reihenfolge nacheinander durchgeführt werden:
a) Erwärmen des Bauteils (1) in einem ersten Ofen (2),
b) Einstellen einer Temperaturdifferenz zwischen zumindest einem ersten Teilbereich (3) und einem zweiten Teilbereich (4) des Bauteils (1) in einer ersten Temperierstation (5),
c) Erwärmen zumindest des ersten Teilbereichs (3) oder des zweiten Teilbereichs (4) des Bauteils (1) in einem zweiten Ofen (6),
c') Bewegen des Bauteils von dem zweiten Ofen (6) in eine zweite Temperierstation (7) mit einer Transporteinrichtung,
d) Kühlen zumindest eines Teilbereichs des Bauteils (1) in der zweiten Temperierstation (7),
e) zumindest teilweises Umformen und/oder Kühlen des Bauteils (1) in einem Presshärtewerkzeug (8).

2. Verfahren nach Anspruch 1, wobei das Bauteil mit einer Zink enthaltenden Beschichtung vorbeschichtet ist.

3. Verfahren nach Anspruch 1 oder 2, wobei das Bauteil (1) zumindest zwei Teilbereiche mit voneinander verschiedener Materialstärke aufweist.

4. Verfahren nach Anspruch 3, wobei in Schritt d) die zumindest zwei Teilbereiche (3, 4) mit voneinander verschiedener Materialstärke unterschiedlich thermisch behandelt werden.

5. Verfahren nach einem der vorhergehenden Ansprüche, wobei in Schritt d) lokal voneinander verschiedene Bauteiltemperaturen aneinander angeglichen werden.

6. Verfahren nach einem der vorhergehenden Ansprüche, wobei in Schritt d) der erste Teilbereich (3) und der zweite Teilbereich (4) des Bauteils (1) auf im Wesentlichen dieselbe Bauteiltemperatur abgekühlt werden, bevor das Bauteil (1) dem Presshärtewerkzeug (8) zugeführt wird, wobei im Wesentlichen einen maximanlen Temperaturunterschied von 100 K bedeutet.

7. Vorrichtung (9) zur Wärmebehandlung eines vorbeschichteten metallischen Bauteils (1), zumindest umfassend:
- einen beheizbaren ersten Ofen (2),
- eine erste Temperierstation (5), die dazu vorgesehen und eingerichtet ist, eine Temperaturdifferenz (10) zwischen zumindest einem ersten Teilbereich (3) und einem zweiten Teilbereich (4) des Bauteils (1) einzustellen,
- einen beheizbaren zweiten Ofen (6),
- eine zweite Temperierstation (7), die dazu vorgesehen und eingerichtet ist, zumindest einen Teilbereich des Bauteils (1) zu kühlen,
- ein Presshärtewerkzeug (8),
wobei der erste Ofen, die erste Temperierstation, der zweite Ofen, die zweite Temperierstation und das Presshärtewerkzeug in der angegebenen Reihenfolge hintereinander angeordnet sind, und wobei die Vorrichtung weiterhin eine Transporteinrichtung zum Bewegen des Bauteils von dem zweiten Ofen in die zweite Temperierstation aufweist.

8. Vorrichtung nach Anspruch 7, wobei die zweite Temperierstation (7) dazu vorgesehen und eingerichtet ist, in voneinander verschiedenen Teilbereichen des Bauteils (1) unterschiedliche Abkühlraten einzustellen.

9. Vorrichtung nach Anspruch 7 oder 8,
wobei die Vorrichtung zur Durchführung eines Verfahrens nach dem der Ansprüche 1 bis 6 vorgesehen und eingerichtet ist.

10. Verwendung einer Vorrichtung nach einem der Ansprüche 7 bis 9 zum thermischen Behandeln eines mit einer Zink enthaltenden Beschichtung vorbeschichteten metallischen Bauteils (1).

## Claims

1. Method for the heat treatment of a pre-coated metal component (1) with at least the following steps which are to be carried out one after the other in the order indicated:
a) Heating the component (1) in a first furnace (2),
b) In a first temperature-control station (5), setting a temperature difference between at least a first sub-region (3) and a second sub-region (4) of the component (1),
c) In a second furnace (6), heating at least the first sub-region (3) or the second sub-region (4) of the component (1),
c') With a transport device, moving the component from the second furnace (6) into a second temperature-control station (7),
d) Cooling at least one sub-region of the component (1) in the second temperature-control station (7),
e) At least partially forming and/or cooling the component (1) in a press-hardening tool (8).

2. Method according to Claim 1, wherein the component is pre-coated with a coating containing zinc.

3. Method according to Claims 1 or 2, wherein the component (1) comprises at least two sub-regions with mutually differing material thicknesses.

4. Method according to Claim 3, wherein in step d), the at least two sub-regions (3, 4) with mutually differing material thicknesses are heat-treated differently.

5. Method according to any one of the preceding claims, wherein in step d) locally differing component temperatures are harmonized with each other.

6. Method according to any one of the preceding claims, wherein in step d), the first sub-region (3) and the second sub-region (4) of the component (1) are cooled to basically the same component temperature before the component (1) is fed to the press-hardening tool (8), wherein basically means a maximum temperature difference of 100 K.

7. Device (9) for the heat treatment of a pre-coated metal component (1), comprising at least:
- a heatable first furnace (2),
- a first temperature-control station (5) which is provided and configured to set a temperature difference (10) between at least one first sub-region (3) and one second sub-region (4) of the component (1),
- a heatable second furnace (6),
- a second temperature-control station (7) which is provided and configured to cool at least one sub-region of the component (1),
- a press-hardening tool (8).
wherein the first furnace, the first temperature-control station, the second furnace, the second temperature-control station and the press-hardening tool are arranged one after the other in the order specified, and wherein the device further comprises a transport device for moving the component from the second furnace into the second temperature-control station.

8. Device according to Claim 7, wherein the second temperature-control station (7) is provided and set up to set different cooling rates in mutually differing sub-regions of the component (1).

9. Device according to Claims 7 or 8, wherein the device is provided and configured for carrying out a method according to Claims 1 to 6.

10. Use of a device according to any one of Claims 7 to 9 for the heat treatment of a metal component (1) pre-coated with a coating containing zinc.

## Revendications

1. Procédé permettant le traitement thermique d'une pièce (1) métallique pré-revêtue comportant au moins les étapes suivantes, lesquelles sont successivement exécutées dans l'ordre indiqué :
a) chauffage de la pièce (1) dans un premier four (2),
b) réglage d'une différence de température entre au moins une première zone partielle (3) et une seconde zone partielle (4) de la pièce (1) dans une première station de thermorégulation (5),
c) chauffage au moins de la première zone partielle (3) ou de la seconde zone partielle (4) de la pièce (1) dans un second four (6),
c') déplacement de la pièce depuis le second four (6) dans une seconde station de thermorégulation (7) à l'aide d'un appareil de transport,
d) refroidissement au moins d'une zone partielle de la pièce (1) dans la seconde station de thermorégulation (7),
e) formage et/ou refroidissement au moins en partie de la pièce (1) dans un outil de trempe sur presse (8).

2. Procédé selon la revendication 1, dans lequel la pièce est pré-revêtue d'un revêtement contenant du zinc.

3. Procédé selon la revendication 1 ou 2, dans lequel la pièce (1) présente au moins deux zones partielles d'épaisseurs de matériau différentes l'une par rapport à l'autre.

4. Procédé selon la revendication 3, dans lequel, à l'étape d), les au moins deux zones partielles (3, 4) d'épaisseurs de matériau différentes l'une par rapport à l'autre sont traitées thermiquement différemment.

5. Procédé selon l'une des revendications précédentes, dans lequel, à l'étape d), des températures de pièce localement différentes les unes des autres sont ajustées les unes par rapport aux autres.

6. Procédé selon l'une des revendications précédentes, dans lequel, à l'étape d), la première zone partielle (3) et la seconde zone partielle (4) de la pièce (1) sont refroidies à sensiblement la même température de pièce avant que la pièce (1) ne soit amenée à l'outil de trempe sur presse (8), une différence de température maximale étant de sensiblement 100 K.

7. Dispositif (9) permettant le traitement thermique d'une pièce (1) métallique pré-revêtue, comprenant au moins :
- un premier four (2) pouvant être chauffé,
- une première station de thermorégulation (5) prévue et configurée pour régler une différence de température (10) entre au moins une première zone partielle (3) et une seconde zone partielle (4) de la pièce (1),
- un second four (6) pouvant être chauffé,
- une seconde station de thermorégulation (7) prévue et configurée pour refroidir au moins une zone partielle de la pièce (1),
- un outil de trempe sur presse (8),
dans lequel le premier four, la première station de thermorégulation, le second four, la seconde station de thermorégulation et l'outil de trempe sur presse sont disposés l'un derrière l'autre dans l'ordre indiqué, et dans lequel le dispositif présente en outre un appareil de transport permettant de déplacer la pièce du second four à la seconde station de thermorégulation.

8. Dispositif selon la revendication 7, dans lequel la seconde station de thermorégulation (7) est prévue et configurée pour régler des vitesses de refroidissement différentes dans des zones partielles différentes les unes des autres de la pièce (1).

9. Dispositif selon la revendication 7 ou 8, dans lequel le dispositif est prévu et configuré pour exécuter un procédé selon l'une des revendications 1 à 6.

10. Utilisation d'un dispositif selon l'une des revendications 7 à 9 permettant le traitement thermique d'une pièce (1) métallique pré-revêtue d'un revêtement contenant du zinc.
